# EUROPÄISCHE PATENTSCHRIFT

(11) **EP 2 843 259 B1**
(45) Veröffentlichungstag und Bekanntmachung des Hinweises auf die Patenterteilung: **01.02.2017**
(21) Anmeldenummer: 14175806.0
(22) Anmeldetag: 04.07.2014
(51) Int. Cl.: F16G 15/02, B60C 27/10, F16G 15/04

(54) **Durchziehöse, insbesondere für Gliederkettenstränge, mit einer Bugauflagefläche**
Eyelet, in particular for lengths of chain, with a bow support surface
Boucle de passage, en particulier pour une longueur de chaîne, avec une surface d'appui avant

(30) Priorität: 19.08.2013 DE 202013103744 U
(43) Veröffentlichungstag der Anmeldung: 04.03.2015
(73) Patentinhaber: RUD Ketten Rieger & Dietz GmbH u. Co. KG, 73432 Aalen (DE)
(72) Erfinder: Frank, Sieber, 73432 Aalen (DE)
(74) Vertreter: Grünecker Patent- und Rechtsanwälte PartG mbB

(56) Entgegenhaltungen:
- DE-A1- 4 115 073
- DE-A1-102008 028 111
- DE-U- 6 903 899
- DE-U1-202012 103 371

## Beschreibung

Die Erfindung betrifft eine Durchziehöse, für einen als Gliederkettenstrang ausgebildeten Haltestrang, mit einer Durchziehöffnung und einer quer zu einer Haltestrangrichtung liegenden Halteöffnung.

Aus der DE 20 2012 103 371 U1 ist ein Kettenverkürzungselement bekannt, bei dem ein in der Halteöffnung befindliches Kettenglied durch seitlich vorspringende Stütznocken gestützt wird. Die DE 41 15 073 A1 zeigt ein Verkürzungsglied für Rundstahlketten, bei dem das in der Halteöffnung befindliche Kettenglied ebenfalls durch seitlich vorspringende Stütznocken gestützt wird. Die DE 10 2008 028 111 A1 zeigt eine Verkürzungsringgabel mit einer geschlossenen Anschlussöffnung. Aus der DE 69 03 899 U ist eine L-förmige Verkürzungslasche für Gliederketten bekannt.

Eine derartige Durchziehöse ist beispielsweise aus der EP 1 614 553 A1 bekannt. Die in dieser Druckschrift beschriebene Durchziehöse wird bei Gleitschutzketten für Fahrzeugräder eingesetzt. In der Halteöffnung der Durchziehöse wird eine Seitenkette der Gleitschutzkette als Haltestrang so fixiert, dass die Durchziehöse allenfalls geringfügig zwischen zwei sich gegenüberliegenden Bugen eines Kettengliedes in Haltestrangrichtung verschieblich ist. Die Durchziehöse weist hierzu an dem von der Durchziehöffnung abgewandten Ende der Halteöffnung zwei in die Halteöffnung zurückgebogene hakenförmige Anschlussarme auf, die die geraden, zwischen den Bugen liegenden Abschnitte eines Kettengliedes von außen umgreifen. Eine Spannkette der Gleitschutzkette kann dann durch die so fixierte Durchziehöffnung durchgezogen werden.

Die Durchziehöse der EP 0 563 778 A2 weist lediglich eine Durchziehöffnung und keine Halteöffnung auf. Bei dieser Durchziehöse erstrecken sich zwei Anschlussarme durch das Auge eines Kettengliedes hindurch zwischen die Buge der beiden benachbarten Kettenglieder, um die Durchziehöse auf dem Haltkettenstrang zu fixieren.

Bei den beiden bekannten Durchziehösen müssen die Arme zur Montage vor Ort plastisch verformt werden. Dies ist aufwändig und fehleranfällig. Werden nämlich die Arme nicht sorgfältig um das jeweilige Kettenglied gebogen, kann die Durchziehöse beim Durchziehen der Spannkette verkippen. Dadurch stellt sich die Durchziehöffnung schräg, so dass die Spannkette verhaken kann.

Der Erfindung liegt die Aufgabe zugrunde, eine Durchziehöse zu schaffen, bei der die Gefahr eines solchen Verhakens vermindert ist.

Diese Aufgabe wird erfindungsgemäß für die eingangs genannte Durchziehöse dadurch gelöst, dass wenigstens eine Bugauflagefläche für ein Kettenglied, das einem in der Halteöffnung befindlichen Kettenglied benachbart ist, vorgesehen ist, die an wenigstens einer Stirnseite der Durchziehöse neben der Halteöffnung vorspringt.

Diese Lösung hat den Vorteil, dass sich die montierte Durchziehöse mit der Bugauflagefläche an dem Bug des Kettengliedes, das auf das in der Halteöffnung befindliche Kettenglied unmittelbar folgt, abstützen kann. Diese Abstützung verhindert das Verkippen der Durchziehöse.

Die erfindungsgemäß ausgestaltete Durchziehöse kann nicht nur im Bereich von Reifen- oder Gleitschutzketten verwendet werden, sondern überall dort, wo ein durch die Durchziehöffnung geführtes Zugmittel, insbesondere ein weiterer Gliederkettenstrang, aber auch ein Seil, ein Riemen oder ein Band relativ beweglich zu einem als Haltestrang dienenden Gliederkettenstrang geführt werden muss. Insbesondere ist eine Anwendung beispielsweise auch im Bereich der Hebe-, Anschlag- und Zurrmittel vorteilhaft.

Bei den Gliederkettensträngen handelt es sich in aller Regel um standardisierte Bauteile, die nur in bestimmten, vorgegebenen, Abmessungen verfügbar sind.

Die folgenden, jeweils für sich vorteilhaften und unabhängig miteinander kombinierbaren Ausgestaltungen bilden die Erfindung weiter.

So kann sich gemäß einer ersten vorteilhaften Ausgestaltung die Halteöffnung zwischen zwei Bugauflageflächen befinden, so dass sich die Durchziehöse symmetrisch an den Bugauflageflächen abstützen kann.

An jeder der beiden Stirnseiten kann wenigstens eine Bugauflagefläche vorhanden sein, so dass ein Verkippen der Durchziehöse in beiden Richtungen verhindert werden kann.

Die wenigstens eine Bugauflagefläche kann zur Durchziehöffnung hin oder von der Durchziehöffnung weg weisen, je nachdem ob sich die von der Durchziehöffnung abgewandte oder die der Durchziehöffnung zugewandte Seite des sich durch die Halteöffnung erstreckenden Haltekettenstranges an der Bugauflagefläche abstützen soll.

Die Bugauflagefläche verläuft vorteilhaft parallel zur Haltestrangrichtung bzw. quer zu einer Richtung, die die Halteöffnung mit der Durchziehöffnung verbindet.

Um ein möglichst geringes Spiel beim Verkippen der Durchziehöse auf dem Haltekettenstrang zu erhalten, ist es von Vorteil, wenn die Bugauflagefläche, im Falle einer zur Durchziehöffnung weisenden Durchziehfläche, zwischen etwa 0,8 und 1,5 oder, im Falle einer von der Durchziehöffnung weg weisenden Bugauflagefläche, zwischen etwa 1,8 und 2,5 Nenndicken des Haltekettenstranges von dem der Durchziehöffnung abgewandten Ende der Halteöffnung in Richtung der Durchziehöffnung versetzt ist. Außerdem sollten sich gemeinsam an einer Stirnseite befindliche Bugauflageflächen mit einer Einführöffnung dazwischen zwischen einer und höchstens 1,5 Nenndicken voneinander beabstandet sein. Der Abstand kann insbesondere einer lichten Breite der Halteöffnung entsprechen.

Die Halteöffnung kann länglich mit einer Längsrichtung sein und insbesondere in ihren Proportionen, insbesondere dem Verhältnis der Längs- zur Schmalseite, den Proportionen einer Schmalseite eines Kettengliedes entsprechen. Die wenigstens eine - vorzugsweise alle - Bugauflagefläche befindet sich vorteilhafterweise an und/oder neben den Schmalseiten der Halteöffnung.

Die Wandungen der Bugauflagefläche können in die Längsrichtung einer länglichen Halteöffnung weisen. Eine quer zur Längsrichtung gemessene lichte Breite der Halteöffnung kann insbesondere kleiner sein als eine doppelte Nenndicke eines Haltekettenstranges, auf den die Abmessungen der Halteöffnung abgestimmt sind. Durch diese Ausgestaltung ist es möglich, die Halteöffnung verschiebesicher auf einem Kettenglied anzubringen, da sie aufgrund ihrer geringen lichten Weite nicht auf die beiden benachbarten, unterschiedlich bzw. quer ausgerichteten Kettenglieder aufgeschoben werden kann.

Die Längsrichtung der Halteöffnung kann zur Durchziehöffnung hin weisen. Bei dieser Ausgestaltung ist bei montierter Durchziehöse ein Kettenglied aufgenommen, dessen Ebene die Durchziehöffnung schneidet. So ist eine kompaktere Bauform der Durchziehöse möglich, denn die beiden benachbarten, außerhalb der Halteöffnung liegenden Kettenglieder sind von der Durchziehöffnung weiter beabstandet als das in der Halteöffnung befindliche Kettenglied.

Eine Bugauflagefläche kann von einer oder mehreren nutförmigen Bugaufnahmen an wenigstens einer Stirnfläche der Durchziehöse ausgebildet sein. Die Bugauflagefläche kann eine Wandung der Bugaufnahme bilden.

Ein Grund der Bugaufnahme liegt einer Öffnung der Bugaufnahme bevorzugt in Haltestrangrichtung gegenüber.

Die Wandungen der Bugaufnahme können quer zu einer Symmetrieachse der Durchziehöse verlaufen. Die Symmetrieachse kann bevorzugt durch die Mitte der Durchziehöffnung und der Halteöffnung verlaufen.

Um die Kippsicherheit der an der Halteöffnung montierten Durchziehöse weiter zu erhöhen, kann an beiden sich gegenüberliegenden Stirnseiten eine Bugaufnahme vorgesehen sein. In diesen Bugaufnahmen können jeweils die Buge der beiden an die Halteöffnung angrenzenden Kettenglieder des sich durch die Halteöffnung erstreckenden Gliederkettenstranges aufgenommen werden.

In einer weiteren Ausgestaltung kann sich die Bugaufnahme zu beiden Seiten der Halteöffnung erstrecken. Dies ist insbesondere dann sinnvoll, wenn die beiden Ränder einen Abstand aufweisen, der kleiner ist als die Breite eines Kettengliedes.

Um das Eintauchen der Buge der zur Halteöffnung benachbarten Kettenglieder einer montierten Durchziehöse in die Bugaufnahme zu vereinfachen, kann sich die Bugaufnahme in einer Weiterbildung der Erfindung in Richtung weg von der Halteöffnung weiten. Insbesondere kann die Wandung der Bugaufnahme an der von der Durchziehöffnung abgewandten Seite geneigt zur Normalen auf der von einem Rand der Halteöffnung aufgespannten Öffnungsebene verlaufen. Die Öffnungsebene der Halteöffnung erstreckt sich dabei bevorzugt senkrecht zur Längsrichtung des bei montierter Durchziehöse durch die Halteöffnung geführten Kettenstranges.

Die die Bugauflagefläche bildende Wandung der Bugaufnahme an der der Durchziehöffnung zugewandten Seite kann senkrecht zur Öffnungsebene der Halteöffnung verlaufen.

Bei der optionalen, vorteilhaften Kombination der beiden vorstehenden Merkmale erhält man eine sich einseitig erweiternde Bugaufnahme. Die der Durchziehöffnung zugewandte Wandung verhindert das Kippen der Durchziehöse auf dem durch die Halteöffnung geführten Gliederkettenstrang; die geneigte Wandung vereinfacht das Eintauchen des der Halteöffnung benachbarten Kettengliedes und lenkt den Bug mit zunehmender Eintauchtiefe auf die Bugauflagefläche.

Zwischen der Halteöffnung und der Durchziehöffnung kann ein Sperrelement angeordnet sein. Das Sperrelement kann ein separates, beispielsweise federbelastetes und/oder federelastisches Sperrelement, wie beispielsweise eine Blattfeder oder ein federgespannter Riegel sein. Bevorzugt ist jedoch das Sperrelement monolithisch in die Durchziehöse integriert. Das Sperrelement verhindert, dass der Haltekettenstrang aus der Halteöffnung in die Durchziehöffnung rutschen kann. Umgekehrt verhindert das Sperrelement auch, dass ein sich der Durchziehöffnung befindlicher Kettenstrang in der Halteöffnung verhaken kann.

Das Sperrelement kann gemäß einer weiteren vorteilhaften Ausgestaltung keilförmig ausgestaltet sein. Eine Keilform bietet den Vorteil, dass sich die elastische Auslenkbarkeit aufgrund des sich verjüngenden Querschnitts zum freien Ende hin erhöht. So kann ein Kettenstrang von der Durchziehöffnung unter Auslenkung wenigstens des freien Endes des Sperrelementes in die Halteöffnung überführt werden.

Das Sperrelement kann halteöffnungsseitig und/oder durchziehöffnungsseitig eine gekrümmte Wandung aufweisen. Die halteöffnungsseitige und/oder durchziehöffnungsseitige Wandung des Sperrelements setzte vorzugsweise stoß- und kantenfrei die übrige Wandung der Halteöffnung und/oder Durchziehöffnung fort.

Gemäß einer weiteren Ausgestaltung können Halteöffnung und Durchziehöffnung durch einen Spalt miteinander verbunden sein, wobei die lichte Weite des Spalts kleiner als die lichte Breite der Halteöffnung ist. Die lichte Weite des Spalts ist insbesondere kleiner als die Nenndicke derjenigen standardisierten Gliederketten, auf die die Halteöffnung abgestimmt ist. Befindet sich ein Gliederkettenstrang in der Halteöffnung, so ist die lichte Weite des Spaltes bevorzugt kleiner als der Durchmesser dieses Gliederkettenstranges.

Der Rand der Halteöffnung kann außen mit einem Verstärkungswulst versehen sein, um auch große Kippmomente verwindungsfrei aufnehmen zu können.

Die Durchziehöse ist bevorzugt aus einem Kunststoff, insbesondere einem faserverstärkten Kunststoff gefertigt. Aufgrund der einfachen geometrischen Form ist die Durchziehöse bevorzugt spritzgegossen.

Bei einer Anordnung, die wenigstens eine Durchziehöse in einer der oben beschriebenen Ausgestaltungen und einen sich durch die Halteöffnung erstreckenden Gliederkettenstrang aufweist, kann die Durchziehöse zwischen den aufeinander zu weisenden Bugen zweier aufeinanderfolgender, gleich ausgerichteter Kettenglieder des Kettenstranges hin und her verschieblich gehalten sein. Durch eine begrenzte Verschieblichkeit kann die Durchziehöse einer Durchziehbewegung der durch die Durchziehöffnung geführten Kette begrenzt folgen. Dies erleichtert das Durchziehen dieses Gliederkettenstranges.

Zur einfacheren Montage zwischen den Bugen zweier aufeinanderfolgender, gleich ausgerichteter Kettenglieder ist die in Haltestrangrichtung gemessene Tiefe des Randes der Halteöffnung bevorzugt kleiner als die Differenz von Teilung und zweifachem Kettenstrangdurchmesser. Die Tiefe des Randes kann jedoch auch nur geringfügig kleiner sein als der Abstand zwischen diesen beiden Bugen, so dass bereits bei einem geringen Verschiebeweg der Durchziehöse auf dem durch die Halteöffnung geführten Gliederkettenstrang die Buge auf der Bugauflagefläche zu liegen kommen bzw. in die Bugaufnahme eintauchen und die Durchziehöse gegen Kippen sichern.

Ist die Tiefe der Halteöffnung im Bereich benachbart zu einer Bugaufnahme größer als der Abstand zweier sich gegenüberliegender Buge des Haltestranges, so ist die Durchziehöse durch die in die Bugaufnahme ragenden Buge kippsicher auf dem Haltestrang gehalten.

Im Folgenden ist die Erfindung anhand mehrer Ausführungsformen mit Bezug auf die Zeichnungen beispielhaft erläutert. In den Zeichnungen werden für Elemente, die sich in Funktion und Aufbau entsprechen, jeweils dieselben Bezugszeichen verwendet.

Nach Maßgabe der obigen Ausführungen kann die in der nachstehenden Ausführungsform beispielhaft wiedergegebene Merkmalskombination abgeändert werden. So kann auf Merkmale verzichtet werden, wenn es bei einer bestimmten Anwendung nicht auf den mit diesem Merkmal verbundenen Vorteil ankommt.

Es zeigen:
- Fig. 1: eine schematische Vorderansicht einer ersten Ausführungsform einer erfindungsgemäßen Durchziehöse;
- Fig. 2: eine schematische Seitenansicht der Durchziehöse der Fig. 1;
- Fig. 3: eine schematische Darstellung einer ersten Stellung im Betrieb der Durchziehöse der Fig. 1 und 2;
- Fig. 4: eine schematische Darstellung einer weiteren, der Betriebsstellung der Fig. 3 folgenden Betriebsstellung;
- Fig. 5: eine schematische Darstellung einer weiteren, der Betriebsstellung der Fig. 4 folgenden Betriebsstellung;
- Fig. 6: eine schematische seitliche Detailansicht einer zweiten Ausführungsform der erfindungsgemäßen Durchziehöse;
- Fig. 7: eine schematische seitliche Detailansicht einer dritten Ausführungsform der erfindungsgemäßen Durchziehöse;
- Fig. 8: eine schematische Perspektivansicht einer Gliederkette.

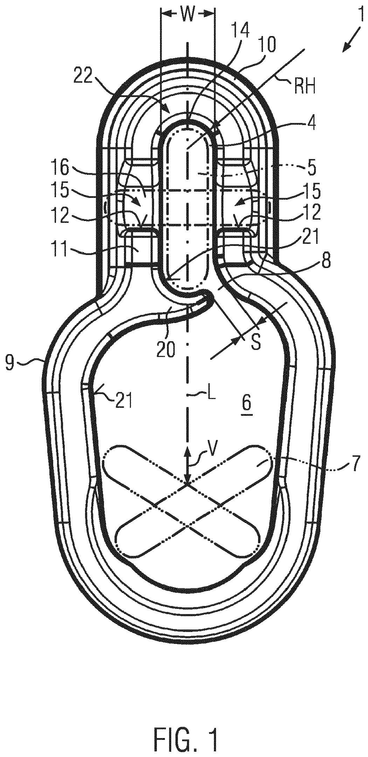

Der Aufbau einer erfindungsgemäßen Durchziehöse 1 insbesondere für Gliederkettenstränge ist anhand der schematischen Darstellungen der Fig. 1, 2 und 8 erläutert.

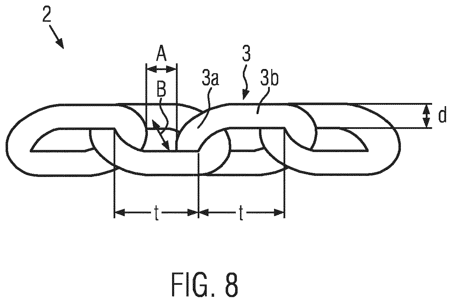

Gliederketten sind in ihren Abmessungen standardisiert, beispielsweise nach DIN 562ff sowie weiteren Normen. Gliederketten umfassen Rund- und Profilstahlketten und weisen, wie anhand des in Fig. 8 gezeigten Gliederkettenstranges 2 zu erkennen ist, eine Teilung t, eine innere Breite B und eine Nenndicke d auf. Die einzelnen Kettenglieder 3 sind an ihren beiden Enden jeweils mit einem runden Bug 3a versehen. Die beiden Buge 3a sind über gerade Abschnitte 3b miteinander verbunden.

Die Abmessungen der Durchziehöse 1 sind auf die Abmessungen einer oder mehrerer geringfügig unterschiedlicher Gliederketten 2 abgestimmt.

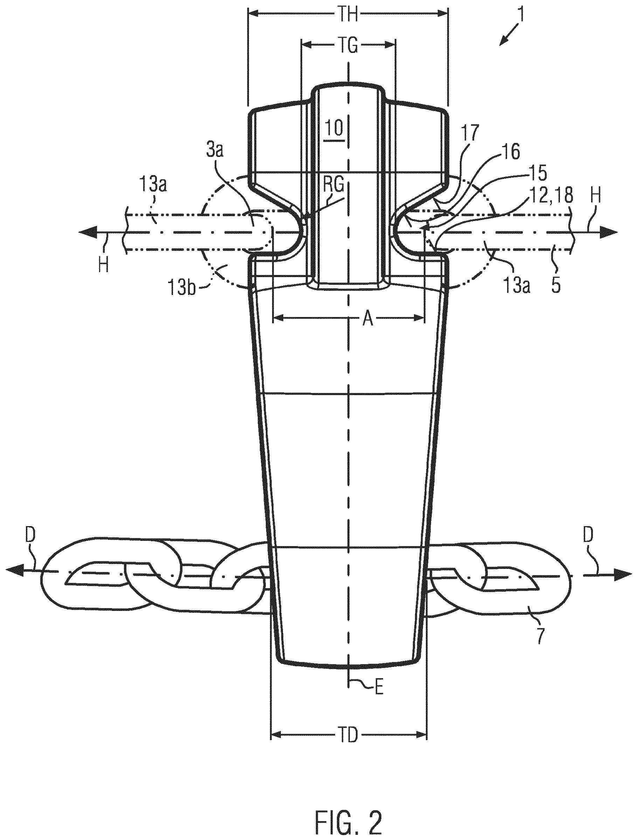

Die Durchziehöse 1 weist, wie Fig. 2 zeigt, eine Halteöffnung 4 auf, mit deren Hilfe die Durchziehöse 1 an einem aus einem Gliederkettenstrang gebildeten, gestrichelt dargestellten Haltestrang 5 fixiert werden kann. In Haltestrangrichtung H ist die Durchziehöse 1 zwischen zwei aufeinanderfolgenden Kettengliedern gleicher Orientierung allenfalls beschränkt beweglich. Die Halteöffnung 4 liegt quer zur Haltestrangrichtung H.

Eine Durchziehöffnung 6 erlaubt das Durchziehen eines Durchziehstranges 7 in Durchziehrichtung D. Der Durchziehstrang 7 muss nicht notwendigerweise als Gliederkettenstrang 2 ausgestaltet sein, sondern kann ein beliebiges anderes Zugmittel sein, wie beispielsweise ein Seil, ein Band, ein Riemen oder eine andere Kettenform. Die Durchziehöffnung 6 ist groß genug, um den Durchziehstrang 7 ohne Verklemmen, Verhaken oder Verklinken durchziehen zu können. Die Durchziehöffnung 6 liegt quer zur Durchziehrichtung D. Durchziehrichtung D und Haltestrangrichtung H können insbesondere parallel zueinander liegen.

Wie Fig. 1 zeigt, können die Halteöffnung 4 und die Durchziehöffnung 6 voneinander beabstandet sein. Die Halteöffnung 4 und die Durchziehöffnung 6 können in derselben Ebene E liegen, die zudem die Mittenebene der Durchziehöse 1 bilden kann.

Anwendung findet die gezeigte Durchziehöse 1 überall dort, wo der Durchziehstrang 7 relativ beweglich zum Haltestrang 5 geführt werden muss. Werden mehrere Durchziehösen 1 in Haltestrangrichtung H beabstandet voneinander am Haltestrang 5 angebracht, so lässt sich der Durchziehstrang 7 parallel und beweglich zum Haltestrang 5 führen. Dies kann man beispielsweise bei Reifenketten nutzen, bei denen die Durchziehöse 1 an einem Seitenkettenstrang als Haltestrang 5 befestigt und zum Festziehen eines Laufnetzes der Reifenkette ein Spannkettenstrang als Durchziehstrang 7 durch die Durchziehöffnung 6 gezogen werden muss. Eine Reifenkette mit Durchziehöse ist beispielsweise in der eingangs erwähnten EP 0 263 778 A2 gezeigt. Weitere Anwendungsbereiche der Durchziehöse 1 betreffen Hebe-, Zurr- oder Anschlagmittel.

Die Durchziehöffnung 6 und die Halteöffnung 4 können miteinander verbunden sein, beispielsweise über einen Spalt 8. Um ein Herausrutschen des Haltestranges 5 aus der Halteöffnung 4 in die Durchziehöffnung 6 zu verhindern, ist eine lichte Weite S des Spaltes kleiner als die Nenndicke d des Haltestranges bzw. eine lichte Breite W der Halteöffnung 4, vorzugsweise kleiner als die halbe Nenndicke d bzw. lichte Breite W.

Die Halteöffnung 4 und die Durchziehöffnung 6 sind jeweils von einem Rand 9 umgeben. Der Rand 9 weist bevorzugt einen Querschnitt in Form eines abgerundeten Rechtecks auf. Der Rand 9 umschließt außen die Halte- und die Durchziehöffnung vorzugsweise lückenlos.

Zur Verstärkung des Randes 9 kann außen ein Versteifungswulst 10 vorgesehen sein. Der Versteifungswulst 10 erstreckt sich um die Halteöffnung 4 herum und kann jeweils an einem Vorsprung des Randes 10 enden. Es kann auch ein vollständig um die Durchziehöse 1 umlaufender Versteifungswulst 10 vorgesehen sein. Der Versteifungswulst 10 kann symmetrisch zur Ebene E angeordnet sein.

Der Rand 9 der Durchziehöse 1 ist an wenigstens einer Stirnseite 11 mit wenigstens einer vorspringenden Bugauflagefläche 12 versehen. Die Bugauflagefläche 12 befindet sich neben der Halteöffnung 4. Sie ist so angeordnet, dass die parallel zur Haltestrangrichtung liegende Ober- und/oder Unterseite eines Buges 3a eines Kettenglieds 13a, das auf das sich in der Halteöffnung 4 befindliche Kettenglied 13b unmittelbar folgt, im Betrieb selbsttätig auf der Bugauflagefläche 12 aufliegt. Durch das Aufliegen des Buges des Kettengliedes 13a wird ein Kippen der Durchziehöse 1 auf dem Haltestrang 5 vermieden. Ein selbständiges Anliegen wird beispielsweise erreicht, wenn die Bugauflagefläche 15 in Richtung zur Durchziehöffnung 6 zwischen etwa 0,8 d und 2,5 d von dem von der Durchziehöffnung 6 abgewandten Ende 14 der Halteöffnung 4 versetzt ist.

Die Bugauflagefläche 12 verläuft bevorzugt parallel zur Haltestrangrichtung H. Sie liegt bevorzugt quer zu einer Richtung V, die die Halteöffnung 4 und die Durchziehöffnung 6 miteinander verbindet. Je nachdem, ob die zur Durchziehöffnung weisende Unterseite oder die von der Durchziehöffnung weg weisende Oberseite des Buges 3a zur Anlage mit der Bugauflagefläche 12 gelangen soll, kann die Bugauflagefläche von der Durchziehöffnung 6 weg oder zu der Durchziehöffnung 6 hin weisen.

Die Halteöffnung 4 kann zwischen zwei Bugauflageflächen 12 angeordnet sein. Wie Fig. 1 und 2 zeigen, können an jeder der beiden Stirnseiten 11 zwei Bugauflageflächen 12, jeweils zu beiden Seiten der Halteöffnung 4 angeordnet sein. Die beiden auf einer Stirnseite 14 neben der Halteöffnung 4 angeordneten Bugauflageflächen 12 sollten miteinander fluchten.

Die Bugauflagefläche 12 kann Teil einer nutförmigen Bugaufnahme 15 sein. Die Bugaufnahme 15 kann einen abgerundeten Grund 16, eine von der Durchziehöffnung 6 abgewandte Wandung 17 und eine der Durchziehöffnung 6 zugewandte Wandung 18 aufweisen. Die Bugauflagefläche 12 kann von wenigstens einer der Wandungen 17, 18 gebildet sein. Im Querschnitt senkrecht zu den Wandungen 17, 18 öffnet sich die Bugaufnahme 15 in Richtung weg von der Halteöffnung, also in Haltestrangrichtung H. Der Grund 16 liegt der Öffnung der Bugaufnahme 15 in Haltestrangrichtung H gegenüber.

Der Grund 16 weist einen Radius RG auf, der bevorzugt größer als die Nenndicke d des Haltestranges 5 ist und insbesondere in etwa einem Radius RH der an einer der oder beiden Schmalseiten 19 der Halteöffnung 4 entspricht. Bei einer solchen Bemessung kann sich die zur Durchziehöse 1 weisende Vorderseite des Buges 3a des Kettengliedes 13a an den Grund 16 anschmiegen, wenn der Bug 3a in die Bugaufnahme 15 eintaucht.

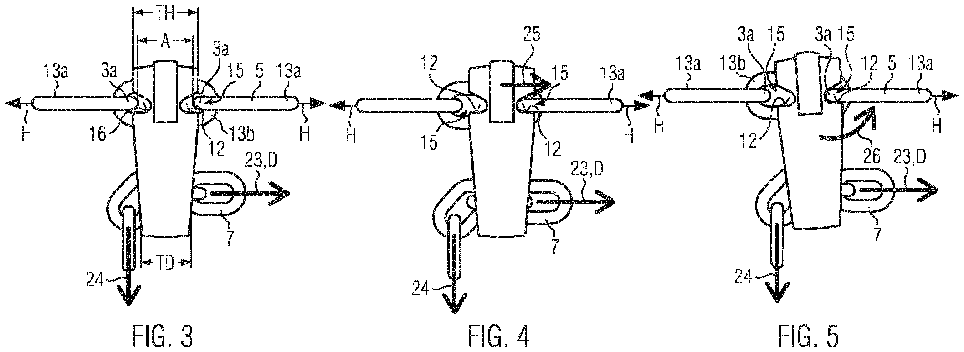

Bei der Ausführungsform der Fig. 1 und 5 ist die Halteöffnung 4 in einer Längsrichtung L lang gestreckt. Die Proportionen der Halteöffnung 4, insbesondere das Verhältnis von Längs- zu Schmalseite, können dabei den Proportionen einer Kettengliedschmalseite, also etwa (2d+B)/d entsprechen. Die Bugauflagefläche 12 oder die Mitte der Bugaufnahme 15 kann in Längsrichtung L auf Höhe der Mitte der Halteöffnung liegen.

In den Fig. 1 und 2 ist lediglich beispielhaft die bevorzugte Orientierung der Halteöffnung 4 dargestellt, bei der die Längsrichtung L der Halteöffnung 4 zur Durchziehöffnung 6 weist, also parallel zur Richtung V verläuft. Bei dieser Ausgestaltung muss die Bugauflagefläche 12 nur wenig vorspringen. In einer alternativen Ausgestaltung kann die Längsrichtung L aber auch quer zur Richtung V verlaufen.

Die Bugaufnahme 15 kann sich in Richtung weg von der Halteöffnung 4 weiten. Hierzu kann eine, nach Fig. 1 die von der Durchziehöffnung 6 abgewandte, Wandung 17 schräg zur Haltestrangrichtung H bzw. Mittenebene E verlaufen. Die Wandung 17 dient bevorzugt als Auflaufschräge, so dass der jeweils gegenüberliegende Bug 3 einfacher eintauchen und mit zunehmender Eintauchtiefe gegen die als Bugauflagefläche 12 dienende Wandung 18 gelenkt werden kann. In einer Abwandlung der Durchziehöse 1 kann auch die Wandung 18 näher an der Durchziehöffnung 6 geneigt zur und die von der Durchziehöffnung 6 weiter entfernte Wandung 17 parallel zur Haltestrangrichtung H verlaufen.

Eine Tiefe TH der Durchziehöse 1 in Haltestrangrichtung H an der Halteöffnung 4 außerhalb der Bugauflagefläche 12 ist bevorzugt kleiner als der Abstand A=(t-2d) der Buge 3a zweier aufeinanderfolgender, gleich orientierter Kettenglieder 13a des Haltestranges 5. Diese Bemessung ermöglicht es, die Durchziehöse 1 ohne großen Kraftaufwand zwischen diese beiden Kettenglieder einzusetzen, unabhängig davon, ob ein nutförmige Bugaufnahme 15 oder eine vorspringende Bugaufnahmefläche 12 vorgesehen ist.

Eine sicherere Fixierung der Durchziehöse 1 am Haltestrang 5 ergibt sich jedoch bei vorhandener nutförmiger Bugaufnahme 15, wenn die Tiefe TH des Randes 9 jenseits der Bugaufnahme 15 größer ist als der Abstand A der Buge zweier aufeinanderfolgender, gleich ausgerichteter Kettenglieder 13a. Bei dieser Ausgestaltung ragen bei montierter Durchziehöffnung 1 die Buge 3a dieser beiden Kettenglieder 13a etwas in die Bugaufnahme 15 hinein, so dass die Durchziehöse 1 im Haltestrang 5 verrastet werden kann. Im Bereich des Grundes 16 sollte die Tiefe TG jedoch stets kleiner als der Abstand A der Buge zweier aufeinanderfolgender, gleich orientierter Kettenglieder des Haltestranges 5 sein, denn die Beweglichkeit des Haltestranges 5 ist gewährleistet, wenn die Buge 3a der Kettenglieder 13a im unbelasteten Zustand der Durchziehöse 1 von dieser beabstandet sind.

Ob die Durchziehöffnung 6 größer ist als die Halteöffnung 4, hängt letztlich davon ab, wie groß der Haltestrang 5 und der Durchziehstrang 7 sind. In den meisten Anwendungen ist damit zu rechnen, dass der Haltestrang 5 und der Durchziehstrang 7 in etwa gleich groß sind. Da durch die Durchziehöffnung 6 der in Fig. 5 gestrichelt angedeutete Schatten des Durchziehstranges 7 ohne Weiteres hindurchpassen muss, wird also in vielen Fällen die Durchziehöffnung bzw. deren lichte Weite größer sein als die Halteöffnung bzw. deren lichte Weite.

Um zu verhindern, dass der Haltestrang 5 aus der Halteöffnung 4 in die Durchziehöffnung 6 rutscht und somit die Fixierung der Durchziehöse 1 auf dem Haltestrang 5 verloren geht, kann ein Sperrelement 20 zwischen Halteöffnung 4 und Durchziehöffnung 6 angeordnet sein.

Ist kein Spalt 8 vorhanden, sollte das Sperrelement 20 aus der Durchziehöse 1 entfernbar oder zumindest zur Bereitstellung eines die Nenndicke d übersteigenden Spaltes 8 beweglich in der Durchziehöse 1 angeordnet sein. Zur Montage wird der Haltestrang 5 zunächst durch die Durchziehöffnung 6 gezogen, bis die gewünschte Position erreicht ist. Bei entferntem oder aus dem Weg bewegtem Sperrelement 20 wird der Haltestrang 5 dann in die Halteöffnung 4 bewegt, wo er in Haltestrangrichtung H formschlüssig zwischen den Bugen 3 der Kettenglieder 13a gehalten ist. Zur Sicherung wird anschließend das Sperrelement 20 wieder eingesetzt oder in eine Position bewegt, in der der Haltestrang 5 in der Halteöffnung 4 aufgenommen ist. Bei einer solchen Ausgestaltung kann das Sperrelement 20 einfach als zwischen Halteöffnung 4 und Durchziehöffnung 6 liegender Spannstift, Schraub- oder Steckbolzen ausgestaltet sein. Als Sperrelement 20 kann auch eine Blattfeder oder ein anderes federbelastetes Sperrelement vorgesehen sein.

Insbesondere wenn die Durchziehöse 1 aus einem Kunststoff, insbesondere einem faserverstärkten Kunststoff, gefertigt ist, ist das Sperrelement bevorzugt monolithisch in die Durchziehöse 1 integriert sein. Das Sperreelement kann, wie in Fig. 5 beispielhaft dargestellt, keilförmig zulaufend ausgestaltet sein. Der Haltestrang 5 wird bei einer solchen Ausgestaltung am Sperrelement vorbei von der Durchziehöffnung 6 aus in die Halteöffnung 4 gedrückt, wobei das Sperrelement 20 unter Vergrößerung des Spaltes 8 kurzzeitig elastisch verformt ist.

Um ein Verhaken des Durchziehstranges 7 zu verhindern, setzt sich eine Innenwand 21 des Randes 9 vorzugsweise im Bereich sowohl der Halteöffnung 4 also auch der Durchziehöffnung 6 stoß- und absatzfrei am Sperrelement 20 fort.

Das Sperrelement 20 kann von der Durchziehöffnung 6 weg zur Halteöffnung 4 gekrümmt sein, so dass das freie Ende des Sperrelements 20 nicht in die Durchziehöffnung 6 weist und nicht mit dem Durchziehstrang 7 verhaken kann.

Das Sperrelement 20 kann an einer Schmalseite 22 der Halteöffnung angeordnet sein und diese versperren.

Die Krümmung des Sperrelements 20 kann dabei an die Nenndicke d eines Kettenelements angepasst sein. Die Krümmung des Sperrelements 20 an seiner der Halteöffnung 4 zugewandten Seite kann der Krümmung der Innenwand 21 an der gegenüberliegenden Seite der Halteöffnung 4 entsprechen.

Die Funktion einer Durchziehöse 1 mit wenigstens einer Bugaufnahme 15 an einer Stirnseite 14 ist im Folgenden mit Bezug auf die Fig. 3 bis 5 erläutert.

In den Fig. 3 bis 5 ist die Durchziehöse 1 zusammen mit einem Haltestrang 5 und einem Durchziehstrang 7, die jeweils als Gliederkettenstränge 2 ausgestaltet sind, beispielhaft gezeigt. Zu erkennen ist, dass sich in der unbelasteten Ausgangsstellung der Fig. 3 ein Kettenglied 13b in der Halteöffnung 4 befindet und die beiden zum Kettenglied 13b benachbarten, gleich ausgerichteten Kettenglieder 13a auf Höhe der Bugaufnahmen 15 liegen.

Der Abstand A der beiden Kettenglieder 13a ist in Fig. 3 kleiner als die Tiefe TH der Durchziehöse 1 in Haltestrangrichtung H an den vom Grund 16 (Fig. 1) abgewandten Enden der Wandungen 17, 18 (Fig. 1). Dadurch ist die Durchziehöse 1 zwischen die Buge der Kettenglieder 13a leicht eingeschnappt und in allen Richtungen quer zur Haltestrangrichtung H formschlüssig gehalten. Der Formschluss zwischen den Bugaufnahmen 15 und den Bugen 3a der Kettenglieder 13a ergänzt die Sperrwirkung des Sperrelementes 20 (Fig. 5). Ist die Sperrwirkung des Formschlusses zwischen der Bugaufnahme 15 und den Bugen der Kettenglieder 13a ausreichend, kann auch auf das Sperrelement 20 verzichtet werden. Umgekehrt kann natürlich auch auf ein Einschnappen der Durchziehöse 1 in den Haltekettenstrang 5 verzichtet werden, wenn die Sperrwirkung des Sperrelements 20 ausreicht. Dann kann die Tiefe TH kleiner als der Abstand A sein.

Die Tiefe TG der Durchziehöse 1 im Bereich des Grundes 16 ist bevorzugt kleiner als der Abstand A, so dass die Durchziehöse 1 in Haltestrangrichtung H auf dem Kettenglied 13b hin und her beweglich gehalten ist.

Wird nun am Durchziehstrang 7 mit einer Kraft 23 gezogen, um eine Gegenkraft 24 zu überwinden, wird die Durchziehöse 1 auf dem Haltestrang 5 aus der in Fig. 3a gezeigten Betriebsstellung in Richtung der Kraft 23 verschoben. Der Bug 3a des in Richtung der Kraft 23 der Durchziehöse 1 gegenüberliegenden Kettengliedes 13a fährt in die ihm gegenüberliegende Bugaufnahme 15 ein, wie in Fig. 4 durch den Pfeil 25 angedeutet ist. Schlägt der Bug des Kettengliedes 13a am Grund 16 der ihm zugewandten Bugaufnahme 15 an, während die Kraft 23 weiter wirkt, so wirkt ein Kippmoment 26. Da das Kettenglied 13b nur wenig Spiel in der Halteöffnung 4 aufweist und das Kettenglied 13a auf der Bugauflagefläche 12 aufliegt, entsteht eine Momentenstütze, die das Kippmoment 26 abfängt und ein Verkippen der Durchziehöse 1 verhindert. Die Momentenstütze wird verstärkt, wenn sich auch der Bug 3a des Kettengliedes 13a an der gegenüberliegenden Seite an der Bugauflagefläche 12 abstützen kann. Die Durchziehöffnung 6 bleibt folglich im Wesentlichen senkrecht zur Durchziehstrangrichtung D orientiert, so dass die volle Größe der Durchziehöffnung 6 zum Durchziehen des Durchziehstranges 7 zur Verfügung steht. Dadurch ist das Risiko vermindert, dass sich der Durchziehstrang 7 in der Durchziehöffnung 6 verhakt.

Eine weitere Maßnahme, die ein störungsfreies Durchziehen des Durchziehstranges 7 durch die Durchziehöffnung 6 ermöglicht, besteht darin, dass der Rand 9 der Durchziehöffnung 6 eine Tiefe TD aufweist, die größer ist als die dreifache Kettenteilung t. Somit liegen an der Innenwand 21 der Durchziehöffnung 6 die geraden Abschnitte 3b von wenigstens drei aufeinanderfolgenden Kettengliedern an.

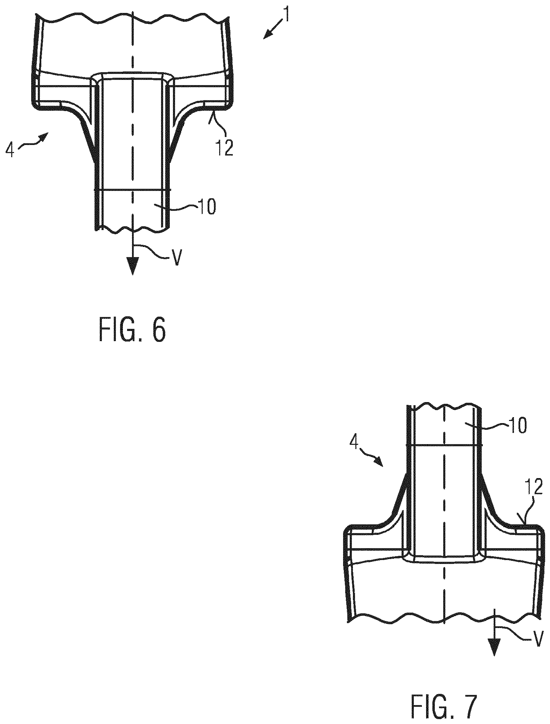

In Fig. 6 und 7 sind zwei weitere Ausführungsbeispiele einer Durchziehöse 1 gezeigt, die keine nutförmige Bugaufnahme 15, sondern lediglich eine vorspringende Bugauflagefläche 12 aufweisen. Die beiden Ausführungsbeispiele unterscheiden sich lediglich in der Orientierung der Bugauflage 12. Die Funktion ist ansonsten die gleiche wie bei den Ausführungsformen der Fig. 1 bis 5.

### Bezugszeichen

- 1: Durchziehöse
- 2: Gliederkettenstrang
- 3: Kettenglied
- 3a: Bug eines Kettengliedes
- 3b: gerader Abschnitt eines Kettengliedes
- 4: Halteöffnung
- 5: Haltekettenstrang
- 6: Durchziehöffnung
- 7: Durchziehstrang
- 8: Spalt
- 9: Rand
- 10: Versteifungswulst
- 11: Stirnseite
- 12: Bugauflagefläche
- 13a: Kettenglied gegenüber der Halteöffnung
- 13b: Kettenglied in der Halteöffnung
- 14: von der Durchziehöffnung abgewandtes Ende der Halteöffnung
- 15: Bugaufnahme
- 16: Grund der Bugaufnahme
- 17: von der Durchziehöffnung abgewandte Wandung
- 18: der Durchziehöffnung zugewandte Wandung
- 20: Sperrelement
- 21: Innenwand des Randes
- 22: Schmalseite der Halteöffnung
- 23: Kraft
- 24: Gegenkraft
- 25: Pfeil
- 26: Kippmoment
- A: Abstand zweier aufeinanderfolgender Kettenglieder gleicher Ausrichtung
- B: innere Breite
- D: Durchziehrichtung
- d: Nenndicke
- E: Mittenebene
- H: Haltestrangrichtung
- L: Längsrichtung der Halteöffnung
- RG: Radius des Grundes
- RH: Radius der Halteöffnung
- S: lichte Weite des Spaltes
- t: Teilung einer Gliederkette
- TH: Tiefe der Durchziehöse an der Halteöffnung
- TD: Tiefe der Durchziehöse an der Durchziehöffnung
- TG: Tiefe der Durchziehöse im Bereich des Grundes
- V: Verbindungsrichtung zwischen Durchzieh- und Halteöffnung
- W: lichte Breite der Halteöffnung

## Patentansprüche

1. Durchziehöse (1) für einen als Gliederkettenstrang (2) ausgebildeten Haltekettenstrang (5), mit einer Durchziehöffnung (6) und einer quer zu einer Haltestrangrichtung (H) liegenden Halteöffnung (4), **gekennzeichnet durch** eine wenigstens eine Bugauflagefläche (12) für ein Kettenglied (13a), das einem in der Halteöffnung (4) befindlichen Kettenglied (13b) benachbart ist, die an wenigstens einer Stirnseite (14) der Durchziehöse (1) neben der Halteöffnung (4) vorspringt.

2. Durchziehöse (1) nach Anspruch 1, **dadurch gekennzeichnet, dass** sich die Halteöffnung (3a) zwischen zwei Bugauflageflächen (12) befindet.

3. Durchziehöse (1) nach Anspruch 1 oder 2, **dadurch gekennzeichnet, dass** die Halteöffnung (3) länglich ist und eine Längsrichtung (L) aufweist und dass die wenigstens eine Bugauflagefläche (12) quer zur Längsrichtung (L) liegt.

4. Durchziehöse (1) nach einem der Ansprüche 1 bis 3, **dadurch gekennzeichnet, dass** die wenigstens eine Bugauflagefläche (12) quer zu einer Richtung (V), die die Durchziehöffnung (6) und die Halteöffnung (4) verbindet, liegt.

5. Durchziehöse (1) nach einem der Ansprüche 1 bis 4. **dadurch gekennzeichnet, dass** wenigstens eine nutförmige Bugaufnahme (15) vorgesehen ist und die Bugauflagefläche (12) eine Wandung (17, 18) der Bugaufnahme (15) bildet.

6. Durchziehöse (1) nach Anspruch 5, **dadurch gekennzeichnet, dass** eine Wandung (17) der Bugaufnahme (15) an der von der Durchziehöffnung (2) abgewandten Seite geneigt zur Haltestrangrichtung (5) verläuft.

7. Durchziehöse (1) nach Anspruch 5 oder 6 **dadurch gekennzeichnet, dass** sich die wenigstens eine Bugaufnahme (15) in Richtung weg von der Halteöffnung (4) weitet.

8. Durchziehöse (1) nach einem der Ansprüche 1 bis 7, **dadurch gekennzeichnet, dass** zwischen Halteöffnung (4) und Durchziehöffnung (6) ein Sperrelement (20) angeordnet ist.

9. Durchziehöse (1) nach Anspruch 8, **dadurch gekennzeichnet, dass** das Sperrelement (20) monolithisch in die Durchziehöse (1) integriert ist.

10. Durchziehöse (1) nach Anspruch 8 oder 9, **dadurch gekennzeichnet, dass** das Sperrelement (20) keilförmig ist.

11. Durchziehöse (1) nach einem der Ansprüche 7 bis 10, **dadurch gekennzeichnet, dass** das Sperrelement (20) zur Halteöffnung (4) hin gekrümmt ist.

12. Durchziehöse (1) nach einem der Ansprüche 1 bis 11, **dadurch gekennzeichnet, dass** die Halteöffnung (4) und die Durchziehöffnung (6) durch einen Spalt (8) miteinander verbunden sind, wobei die lichte Weite (S) des Spaltes (8) kleiner ist als eine lichte Breite (W) der Halteöffnung (4).

13. Durchziehöse (1) nach einem der Ansprüche 1 bis 12, **dadurch gekennzeichnet, dass** die Durchziehöse (1) aus Kunststoff ist.

14. Anordnung mit wenigstens einer Durchziehöse (1) nach einem der Ansprüche 1 bis 13 und einem in der Halteöffnung (4) fixierbaren Haltestrang (5), **dadurch gekennzeichnet, dass** die Durchziehöse (1) zwischen den Bugen zweier aufeinanderfolgender, gleich ausgerichteter Kettenglieder (13a) in Haltestrangrichtung (5) hin und her verschieblich an dem Haltestrang (5) befestigbar ist.

15. Anordnung nach Anspruch 14, **dadurch gekennzeichnet, dass** ein durch die Durchziehöffnung (2) durchziehbarer, von einem Gliederkettenstrang (2)gebildeter Durchziehstrang (7) vorhanden ist und dass die Tiefe (TD) der Durchziehöffnung (2) in Durchzugsrichtung (D) größer als die doppelte Teilung (t) der Gliederkette ist.

## Claims

1. Pull-through eyelet (1) for a carrying chain strand (5) designed as a link chain strand (2), comprising a pull-through opening (6) and a retaining opening (4) that is transverse to a carrying strand direction (H), **characterised by** at least one nose support surface (12) for a chain link (13a) that is adjacent to a chain link (13b) positioned in the retaining opening (4), which nose support surface protrudes next to the retaining opening (4) on at least one end face (14) of the pull-through eyelet (1).

2. Pull-through eyelet (1) according to claim 1, **characterised in that** the retaining opening (3a) is located between two nose support surfaces (12).

3. Pull-through eyelet (1) according to either claim 1 or claim 2, **characterised in that** the retaining opening (3) is elongate and has a longitudinal direction (L), and **in that** the at least one nose support surface (12) is transverse to the longitudinal direction (L).

4. Pull-through eyelet (1) according to any of claims 1 to 3, **characterised in that** the at least one nose support surface (12) is transverse to a direction (V) that connects the pull-through opening (6) and the retaining opening (4).

5. Pull-through eyelet (1) according to any of claims 1 to 4, **characterised in that** at least one groove-like nose support (15) is provided and the nose support surface (12) forms a wall (17, 18) of the nose support (15).

6. Pull-through eyelet (1) according to claim 5, **characterised in that** a wall (17) of the nose support (15) extends along the side remote from the pull-through opening (2) in a manner inclined towards the carrying strand direction (5).

7. Pull-through eyelet (1) according to either claim 5 or claim 6, **characterised in that** the at least one nose support (15) widens in the direction away from the retaining opening (4).

8. Pull-through eyelet (1) according to any of claims 1 to 7, **characterised in that** a locking element (20) is arranged between the retaining opening (4) and the pull-through opening (6).

9. Pull-through eyelet (1) according to claim 8, **characterised in that** the locking element (20) is monolithically integrated into the pull-through eyelet (1).

10. Pull-through eyelet (1) according to either claim 8 or claim 9, **characterised in that** the locking element (20) is wedge-shaped.

11. Pull-through eyelet (1) according to any of claims 7 to 10, **characterised in that** the locking element (20) is curved towards the retaining opening (4).

12. Pull-through eyelet (1) according to any of claims 1 to 11, **characterised in that** the retaining opening (4) and the pull-through opening (6) are interconnected by means of a gap (8), the clear width (S) of the gap (8) being less than a clear width (W) of the retaining opening (4).

13. Pull-through eyelet (1) according to any of claims 1 to 12, **characterised in that** the pull-through eyelet (1) is made of plastics material.

14. Arrangement comprising at least one pull-through eyelet (1) according to any of claims 1 to 13 and a carrying strand (5) that can be fixed in the retaining opening (4), **characterised in that** the pull-through eyelet (1) can be fastened on the carrying strand (5) between the noses of two successive, identically oriented chain links (13a) so as to be movable back and forth in the carrying strand direction (5).

15. Arrangement according to claim 14, **characterised in that** said arrangement includes a pull-through strand (7) that can be pulled through the pull-through opening (2) and is formed by a link chain strand (2), and **in that** the depth (TD) of the pull-through opening (2) in the pull-through direction (D) is more than twice the pitch (t) of the link chain.

## Revendications

1. Boucle de traversée coulissante (1) pour un tronçon de chaîne de maintien (5) réalisé en tant que tronçon de chaîne à maillons (2), comprenant une ouverture de passage de coulissement (6) et une ouverture de maintien (4) placée de manière transversale à une direction de tronçon de maintien (H),
**caractérisée par** au moins une surface d'appui d'extrémité de maillon (12), qui est destinée à un maillon de chaine (13a) voisin d'un maillon de chaine (13b) se trouvant dans l'ouverture de maintien (4), et qui fait saillie sur au moins un côté frontal (14) de la boucle de traversée coulissante (1), à côté de l'ouverture de maintien (4).

2. Boucle de traversée coulissante (1) selon la revendication 1, **caractérisée en ce que** l'ouverture de maintien (4) se trouve entre deux surfaces d'appui d'extrémité de maillon (12).

3. Boucle de traversée coulissante (1) selon la revendication 1 ou la revendication 2, **caractérisée en ce que** l'ouverture de maintien (4) est de configuration allongée et présente une direction longitudinale (L), et **en ce que** ladite au moins une surface d'appui d'extrémité de maillon (12) est agencée transversalement à la direction longitudinale (L).

4. Boucle de traversée coulissante (1) selon l'une des revendications 1 à 3, **caractérisée en ce que** ladite au moins une surface d'appui d'extrémité de maillon (12) est agencée transversalement à une direction (V), qui relie l'ouverture de passage de coulissement (6) et l'ouverture de maintien (4).

5. Boucle de traversée coulissante (1) selon l'une des revendications 1 à 4, **caractérisée en ce qu'**il est prévu au moins un logement d'accueil d'extrémité de maillon (15) en forme d'encoche, et la surface d'appui d'extrémité de maillon (12) forme une paroi (17, 18) du logement d'accueil d'extrémité de maillon (15).

6. Boucle de traversée coulissante (1) selon la revendication 5, **caractérisée en ce qu'**une paroi (17) du logement d'accueil d'extrémité de maillon (15), sur le côté opposé à celui situé près de l'ouverture de passage de coulissement (6), s'étend de manière inclinée par rapport à la direction du tronçon de maintien (5).

7. Boucle de traversée coulissante (1) selon la revendication 5 ou la revendication 6, **caractérisée en ce que** ledit au moins un logement d'accueil d'extrémité de maillon (15) s'évase dans la direction s'éloignant de l'ouverture de maintien (4).

8. Boucle de traversée coulissante (1) selon l'une des revendications 1 à 7, **caractérisée en ce qu'**entre l'ouverture de maintien (4) et l'ouverture de passage de coulissement (6) est agencé un élément d'arrêt (20).

9. Boucle de traversée coulissante (1) selon la revendication 8, **caractérisée en ce que** l'élément d'arrêt (20) est intégré de manière monolithique à la boucle de traversée coulissante (1).

10. Boucle de traversée coulissante (1) selon la revendication 8 ou la revendication 9, **caractérisée en ce que** l'élément d'arrêt (20) présente une forme de coin.

11. Boucle de traversée coulissante (1) selon l'une des revendications 7 à 10, **caractérisée en ce que** l'élément d'arrêt (20) est courbé en direction de l'ouverture de maintien (4).

12. Boucle de traversée coulissante (1) selon l'une des revendications 1 à 11, **caractérisée en ce que** l'ouverture de maintien (4) et l'ouverture de passage de coulissement (6) sont reliées mutuellement par l'intermédiaire d'un interstice (8), la largeur d'ouverture libre (S) de l'interstice (8) étant inférieure à une largeur d'ouverture libre (W) de l'ouverture de maintien (4).

13. Boucle de traversée coulissante (1) selon l'une des revendications 1 à 12, **caractérisée en ce que** la boucle de traversée coulissante (1) est en matière plastique.

14. Agencement comprenant au moins une boucle de traversée coulissante (1) selon l'une des revendications 1 à 13, et un tronçon de maintien (5) pouvant être fixé dans l'ouverture de maintien (4), **caractérisé en ce que** la boucle de traversée coulissante (1) peut être fixée sur le tronçon de maintien (5), de manière coulissante en va et vient dans la direction du tronçon de maintien (5), entre les extrémités de maillon de deux maillons de chaine (13a) successifs de même orientation.

15. Agencement selon la revendication 14, **caractérisé en ce qu'**il est prévu un tronçon de coulissement (7) formé par un tronçon de chaine à maillons (2) et pouvant coulisser en étant tiré à travers l'ouverture de passage de coulissement (6), et **en ce que** la profondeur (TD) de l'ouverture de passage de coulissement (6) dans la direction de traversée de coulissement (D) est plus grande que le pas (t) double de la chaine à maillons.
